# EUROPEAN PATENT APPLICATION

(11) **EP 3 345 765 A1**
(43) Date of publication of application: **11.07.2018**
(21) Application number: 17173183.9
(22) Date of filing: 29.05.2017
(51) Int. Cl.: B33Y 50/02, H04N 1/387, H04N 1/56

(54) **METHOD FOR DELETING INTERNAL COLOR INFORMATION OF 3D OBJECT**

(30) Priority: 05.01.2017 TW 106100297
(71) Applicant: XYZprinting, Inc., New Taipei City 22201 (TW); Kinpo Electronics, Inc., New Taipei City 22201 (TW)
(72) Inventor: HUANG, Yu-Ting, New Taipei City 22201 (TW); SHIH, Ko-Wei, New Taipei City 22201 (TW)
(74) Representative: 2K Patentanwälte Blasberg Kewitz & Reichel

(57) **Abstract**

A method for deleting internal color information of 3D object (2) is disclosed and includes following steps: performing an object slicing process to an input 3D object (2) for obtaining data of at least two printing layers (3) of the 3D object (2); performing a comparing action to two adjacent printing layers according to the data of the two adjacent printing layers; determining an overlapped area (30) of a lower printing layer (31) and an adjacent upper printing layer (32) according to a comparing result of the comparing action; deleting color information in the overlapped area (30) from the data of the lower printing layer (31); and updating the data of the lower printing layer (31) according to the deleted color information.

## Description

### BACKGROUND OF THE INVENTION

### Field of the Invention

The technical field relates to 3D object, especially to a method for deleting internal color information of a 3D object.

### Description of Prior Art

In view of maturity of 3D print technology, and reduced volume and price of 3D printer, 3D printer gets popular in recent years. For making a completely printed 3D model more acceptable to the user, part of manufacturers have developed a 3D printer that can print a full-color 3D model.

For printing a full color 3D model, a 3D object used by the aforementioned 3D printer needs to include object information and color information. For the convenience of a user to perform editing of a more complicated 3D object, some software provides a plurality of subjective 3D objects built in advance, the user can build a 3D object needed through assembling and editing a plurality of subjective 3D objects.

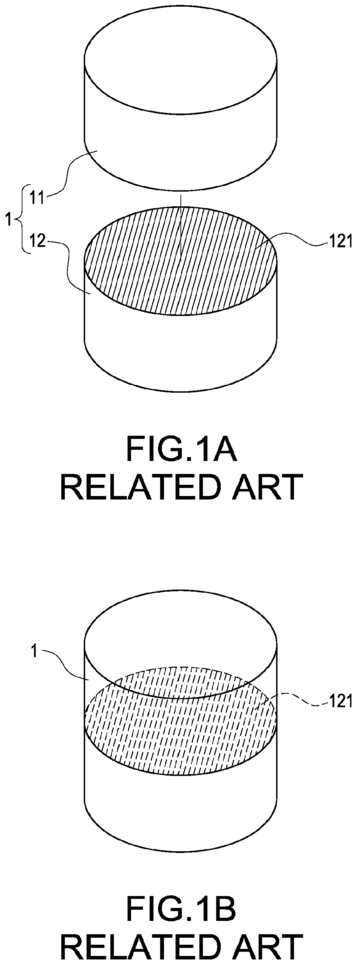

As shown in Fig. 1A and Fig. 1B, Fig. 1A and Fig. 1B respectively shows diagrams of a related-art 3D object before being assembled and after being assembled. As shown in Fig. 1A, a first subjective 3D object 11 and a second subjective 3D object 12 built in software or edited by the user in advance can be inputted, when a user operates a 3D drawing software, then the two subjective 3D object 11, 12 are merged to be a required 3D object 1. The example shown in Fig. 1A is exemplified with only two subjective 3D objects 11, 12, but a construction of the 3D object 1 is not limited to using only two subjective 3D objects.

The user can merge the edited two subjective 3D objects 11, 12 to the 3D object 1 after performing editing action to the two subjective 3D objects 11, 12 respectively when executing the editing action, or can edit the 3D object 1 after merging to generate the 3D object 1.

As shown in Fig. 1B, if the first subjective 3D object 11 is located on the top, and the second subjective 3D object 12 is located on the bottom, then when the two subjective 3D objects 11, 12 are merged, a top plane 121 of the second subjective 3D object 12 is located inside the structure of the merged 3D object 1. Therefore, if the top plane 121 of the second subjective 3D object 12 has color, then there is corresponding color information in the 3D object 1 structure.

If the 3D printer performs (according to the 3D object 1) a printing action to a corresponding entity 3D model, then the structure corresponding to the top plane 121 is colored. Because the user cannot see the internal structure of the 3D model (the user only can see the outer surface of the 3D model), performing coloring to the internal structure of the 3D model just wastes the ink. Moreover, because the ink is water based or oil based, if the internal structure of the 3D model is colored, then the structural robustness of the printed 3D model is weakened.

### SUMMARY OF THE INVENTION

The disclosure is directed to provide a method for deleting internal color information of a 3D object, deleting color information in the 3D object, thus the internal structure does not need to be colored when the 3D printer prints the 3D object.

One of the exemplary embodiments, the method mainly includes the following steps: performing an object slicing process to an input 3D object by a processor, for obtaining data of a plurality of printing layers; performing a comparing action to a lower printing layer and an adjacent upper printing layer, and obtaining a overlapped area of the lower printing layer and the upper printing layer according to a comparing result; deleting color information on the overlapped area from the data of the lower printing layer; and updating data of the lower printing layer according to the color information deleted.

Compared to related-art, the present disclosure deletes the color information on the overlapped area of the adjacent two printing layers, when executing slicing process to the 3D object 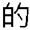 slicing process. Thus the 3D printer does not color the internal structure of the 3D model, when printing the entity 3D model corresponding to the entity 3D model. In this way, the firmness of the structure of the 3D model is improved, and the ink wasted is reduced.

### BRIEF DESCRIPTION OF DRAWING

One or more exemplary embodiments of the present disclosure are illustrated by way of example and not limitation in the figures of the accompanying drawings, in which like references indicate similar elements. These drawings are not necessarily drawn to scale.
Fig. 1A shows a diagram of a 3D object of related-art before being assembled.
Fig. 1B shows a diagram of a 3D object of related-art after being assembled.
Fig. 2 shows a flowchart of deleting the internal color according to a specific exemplary embodiment of the present disclosure.
Fig. 3A shows a diagram of a first overlap according to a specific exemplary embodiment of the present disclosure.
Fig. 3B shows a diagram of a second overlap according to a specific exemplary embodiment of the present disclosure.
Fig. 4 shows a flowchart of deleting the internal color according to another specific exemplary embodiment of the present disclosure.
Fig. 5A shows a diagram of first color information according to a specific exemplary embodiment of the present disclosure.
Fig. 5B shows a diagram of second color information according to a specific exemplary embodiment of the present disclosure.
Fig. 5C shows a diagram of a third color information according to a specific exemplary embodiment of the present disclosure.
Fig. 6 shows a flowchart of deleting the internal color according to another specific exemplary embodiment of the present disclosure.

### DETAILED DESCRIPTION OF THE INVENTION

The present disclosure discloses a method of deleting internal color information of a 3D object (hereinafter the deleting method) in each exemplary embodiment, the deleting method is mainly used for a computer device or a 3D printer, wherein the computer device and the 3D printer is arranged locally or at the cloud.

The deleting method uses a processor of the computer device or the 3D printer to perform a front process to a 3D object to be used. Specifically, before the 3D printer prints (according to the 3D object) a corresponding physical 3D model, the front process can be used to delete the color information in the structure of the 3D object, and only the color information for the outer surface of the 3D object is preserved. When the 3D printer executes the printing action, the printing action is performed according to the processed 3D object. Thus the ink wasted is reduced effectively, and the completely printed 3D model has an improved structural robustness.

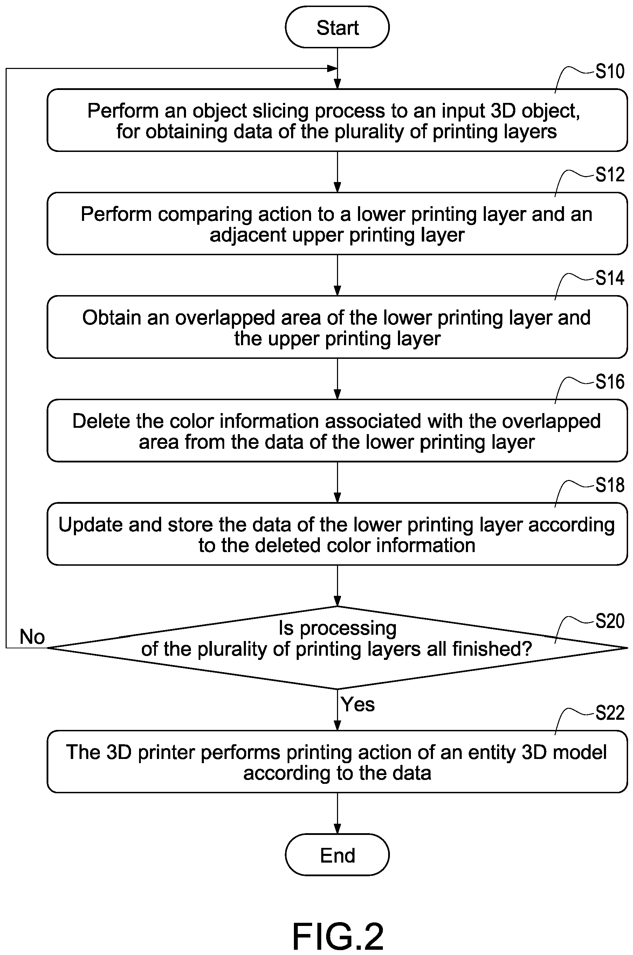

Please refer to Fig. 2 first, Fig. 2 shows a flowchart of deleting the internal color according to an exemplary embodiment of the present disclosure. As shown in Fig. 2, in an exemplary embodiment, the processor performs an object slicing process to an input 3D object first, for slicing the 3D object to the plurality of printing layers, and respectively obtaining data of the plurality of printing layers (step S10). The aforementioned object slicing process is known for the skilled in the art, detailed description is omitted here.

In the exemplary embodiment, the 3D object can be edited by the user, and can be formed by merging at least two subjective 3D objects (as shown in Fig. 1A and Fig. 1B), but not limited here.

Then, the processor performs comparing action (step S12) to a lower printing layer and an adjacent upper printing layer in the plurality of printing layer, and obtains an overlapped area of the lower printing layer and the upper printing layer according to comparing result (step S14). For example, the processor can perform comparing action to the first layer and the second layer in the plurality of printing layers, and can obtain an overlapped area of the first layer and the second layer; or can perform comparing action to the second layer and third layer in the plurality of printing layer, and can obtain an overlapped area of the second layer and third layer, and so on.

After the step S 14, the processor further deletes the color information associated with the overlapped area from the data of the lower printing layer (step S16). However, if the data of the lower printing layer shows that the lower printing layer does not include any color information, or the lower printing layer does not include any color information associated with the overlapped area, then the step S16 could be skipped by the processor.

Specifically, the present disclosure is mainly applied to the situation where a printing layer (lower printing layer) is stacked by another printing layer (upper printing layer) and an overlap area is present between two adjacent printing layers (namely, between the lower printing layer and the upper printing layer) from projection view, and the present disclosure deletes color information corresponding to the overlap area of the lower printing layer. When the contours of two adjacent printing layers (viewed from projection direction) have an overlap area, the processor preserves the color information corresponding to the outer surface of the 3D object and belongs to the overlap area. Therefore, the outer surface of the 3D object has intact color while part of the color information of the internal structure of the 3D object is deleted.

It should be noted that, the present disclosure mainly compares the adjacent two printing layers to determine if it is needed to delete the color information, thus the aforementioned comparing action can be performed after the processor obtains the data of the adjacent two printing layers.

In an exemplary embodiment, the processor can directly complete all slicing action of the 3D object in the step S10, for executing the step S12 after obtaining the data of all printing layers of the 3D object (for example, slicing the 3D object to 100 layers or 1000 layers), to perform comparing action to two adjacent printing layers. In another exemplary embodiment, the processor in the step S10 can first complete two times of the slicing action and obtain the data of two printing layers, then the step S12 is executed to perform comparing action to two adjacent printing layers, and to perform the next slicing action after the comparing action is completed. The aforementioned description is only the specific exemplary embodiment of the present disclosure, not for limitation of the invention.

After step S16, the processor updates and stores (according to the deleted color information) the data of the lower printing layer (step S18). The updated data does not include the color information of the lower printing layer in the overlapped area.

After step S18, the processor determines if processing of the plurality of printing layers of the 3D object is all finished (step S20), and the object slicing process of the 3D object is not completed, or before comparison between any two adjacent printing layers in the plurality of printing layers is all finished, step S10 to step S18 are executed repeatedly, for deleting the color information on the overlapped area (that is, belonged to the internal structure of the 3D object) of all the printing layers and other printing layers.

If the processor determines that processing of the plurality of printing layers of the 3D object has been finished, then the updated and stored data can be exported, for using the 3D printer to perform printing action of an entity 3D model corresponding to the 3D object (step S22) according to the data.

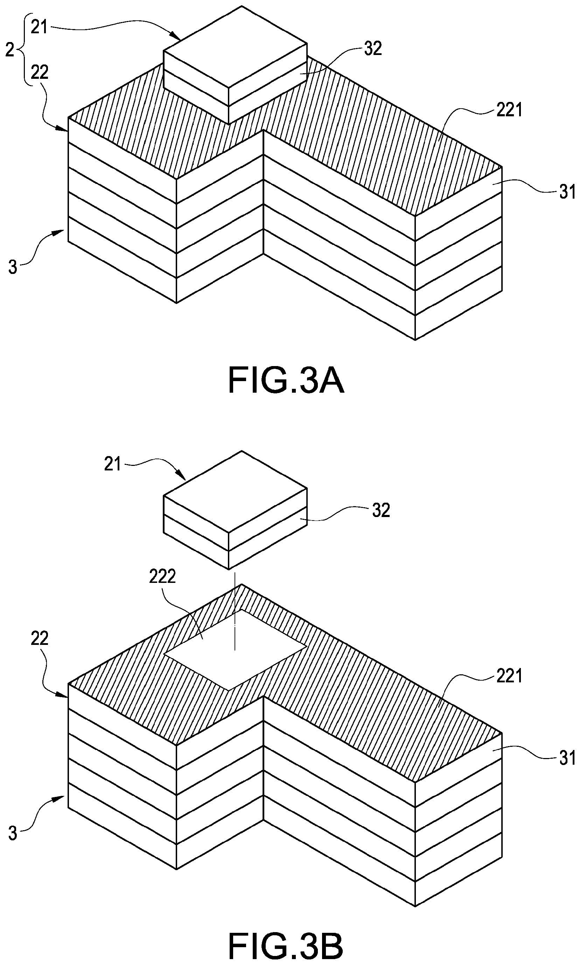

Refer to Fig. 3A and Fig. 3B, showing diagrams of a first and second overlap according to a specific exemplary embodiment of the present disclosure respectively. As shown in Fig. 3A, when the user operates 3D drawing software, a first subjective 3D object 21 and a second subjective 3D object 22 can be edited or loaded in advance. In an exemplary embodiment, the user merges the edited two subjective 3D objects 21, 22 to the required 3D object 2 after the user performs editing to the two subjective 3D objects 21, 22. In another exemplary embodiment, the user also can merge the two subjective 3D objects to the required 3D object 2 first, then can directly perform editing to the 3D object 2. The exemplary embodiment uses the two subjective 3D objects 21, 22 for example, but the number of the subjective 3D objects is not limited to two.

When the user completes the editing, the processor can perform the aforementioned object slicing process to the 3D object 2, for obtaining the data of the plurality of printing layers 3. When a 3D printer performing printing, the printing layers 3 are mainly printed layer by layer according to the data of the printing layers 3, to form an entity 3D model corresponding to the 3D object 2 by overlapping the printing layers 3.

Specifically, the two subjective 3D objects 21,22 are two independent objects, and merged according to the user's requirement. The connection parts of the two subjective 3D objects 21, 22 are the outer surface part of the subjective 3D object 21, 22 respectively, thus the connection parts would have the color information (for example, a top plane 221 of the first subjective 3D object 21 has the color information). It is an object of each exemplary embodiment of the present disclosure to delete the color information of the subjective 3D objects 21, 22, at the connection parts (that is, overlapped parts), to prevent the ink being wasted, and to improve the firmness of the printed 3D model structure.

As shown in Fig. 3B, when the processor executes the object slicing process, the plurality of printing layers 3 are generated, and any two adjacent printing layers 3 are compared. Specifically, the processor performs comparing action to each lower printing layer 31 and an upper printing layer 32 adjacent to lower printing layer 31 of the plurality of printing layers 3, and finds out an overlapped area 222 of the lower printing layer 31 and the upper printing layer 32. In the exemplary embodiment, the lower printing layer 31 has the color information, thus the processor finds out the overlapped area 222 of the lower printing layer 31 and the upper printing layer 32 after the comparing action, and deletes the color information of the lower printing layer 31 on the overlapped area 222, then updates the relative data of the lower printing layer 31 accordingly.

In the exemplary embodiment, the upper printing layer 32 does not cover the lower printing layer 31 completely. The lower printing layer 31 could be the outer surface part of the 3D object 2 outside the part of the overlapped area 222, thus the processor preserves the color information without deleting.

In another exemplary embodiment, an area of the upper printing layer 32 could be larger than that of the lower printing layer 31, and the upper printing layer 32 can completely cover the lower printing layer 31. In this condition, the processor deletes all color information of the top plane (that is, the part connected with the upper printing layer 32) of the lower printing layer 31.

Specifically, when a 3D printer prints the 3D object 2, the 3D printer performs coloring action to the lower printing layer 31 according to the updated data, thus the 3D printer does not performing coloring action to the part of the lower printing layer 31 on the overlapped area 222. In this way, the ink is effectively prevented from being wasted, and the firmness of the structure of the printed 3D model.

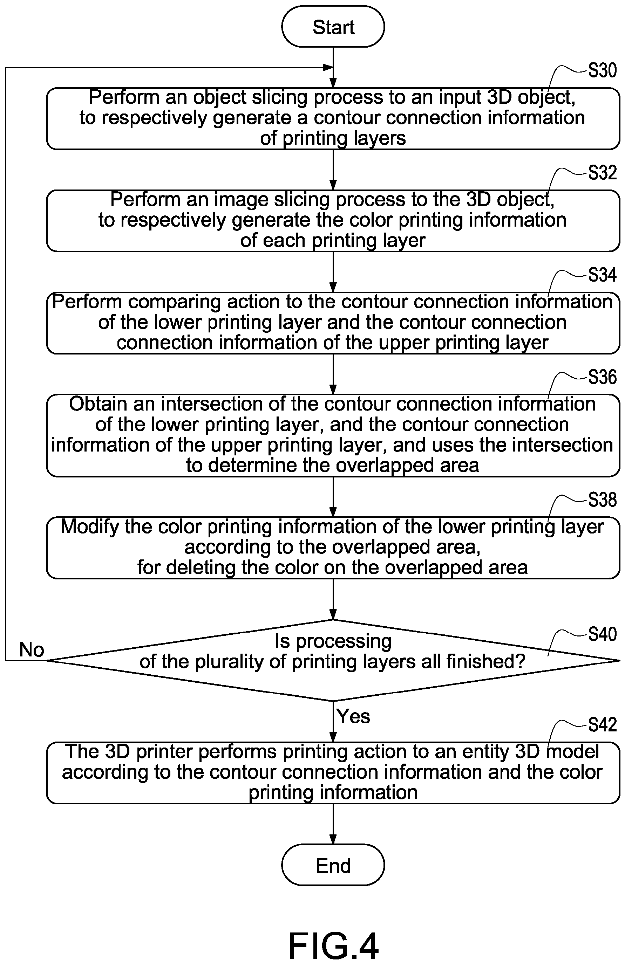

Refer to Fig. 4, Fig. 4 shows a flowchart of deleting the internal color according to another specific exemplary embodiment of the present disclosure. Fig. 4 is used for further description of the deleting flowchart shown in Fig. 2.

The exemplary embodiment shown in Fig. 4 is applied to the aforementioned computer device or 3D printer. The processor of the computer device or the 3D printer performs an object slicing process to an input 3D object, to respectively generate contour connection information of the plurality of printing layers (step S30).

Moreover, the processor performs an image slicing process to the 3D object, to respectively generate the color printing information of each printing layer (step S32).

Specifically, each printing layer respectively corresponds to one of the contour connection information and one of the color printing information, that is, after the object slicing process and the image slicing process are completed, the number of the contour connection information, the number of the color printing information and the number of the printing layers are the same. When performing printing action, the 3D printer prints (according to the contour connection information) a body of an entity 3D model corresponding to the 3D object, and performs coloring to the body of the entity 3D model according to the color printing information.

Then, the processor performs comparing action to a lower printing layer and an upper printing layer adjacent to the lower printing layer in the plurality of printing layers. Specifically, the processor performs comparing action to the contour connection information of the lower printing layer and the contour connection information of the upper printing layer (step S34), for obtaining an intersection of the contour connection information of the lower printing layer, and the contour connection information of the upper printing layer, and uses the intersection to determine the overlapped area (step S36). In other words, if the lower printing layer and the upper printing layer have printing routes partly the same or completely the same, then the part being the same is the overlapped area.

After step S36, the processor modifies (according to the overlapped area) and updates the color printing information of the lower printing layer, for deleting the color on the overlapped area from the color printing information of the lower printing layer (step S38). Specifically, in step S38, the processor mainly performs image recognition and editing process to the color printing information of the lower printing layer, for reading the image content of the color printing information, then performing editing to the image content (that is, deleting the color on the overlapped area from the image content).

After step S38, the processor updates (according to the edited color) the color printing information of the lower printing layer.

After step S38, the processor determines if processing of the plurality of printing layers of the 3D object is finished (step S40), and repeatedly executes step S30 to step S38, before comparison between any two adjacent printing layers in the plurality of printing layers is all finished, for deleting the color on the overlapped area of all the printing layers.

If the processor determines that processing of the plurality of printing layers of the 3D object is all finished, then the updated contour connection information and the color printing information can be exported or stored temporarily, for the 3D printer performing (according to the contour connection information and the color printing information) printing action to an entity 3D model corresponding to the 3D object (step S42).

Generally, during a modeling process of a 3D object, the processor mainly takes the outer surface of the 3D object as an assembly of a plurality of polygons (for example, triangular plane or quadrilateral plane). When performing calculating action to the color information of the 3D object, the processor mainly determines the color information of the whole 3D object by the configuration of the color of the plurality of polygons.

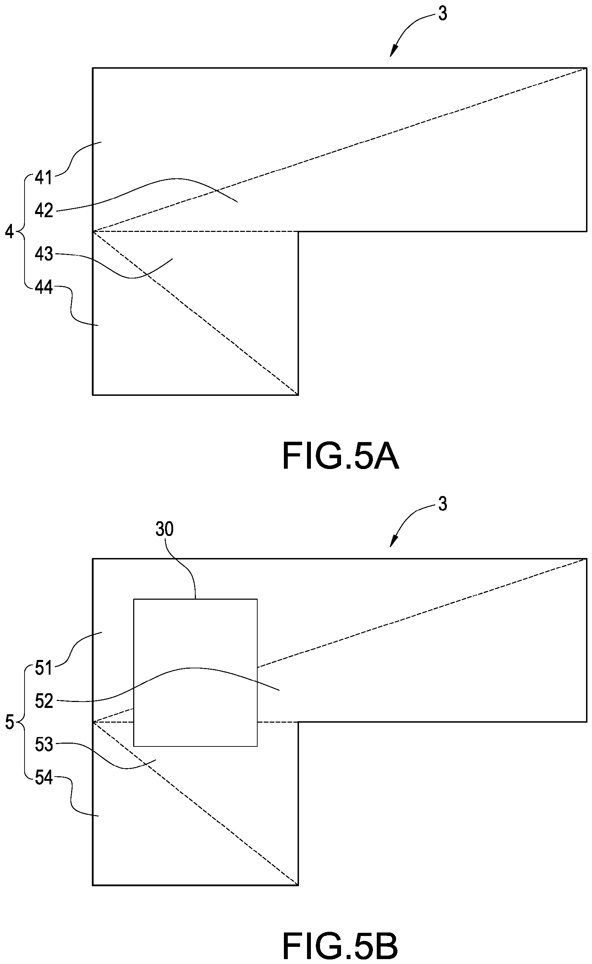

Refer to Fig. 5A to Fig. 5C again, respectively shows a diagram of first, second, and third color information according to a specific exemplary embodiment of the present disclosure. In Fig. 5A to Fig. 5C, the outer surface of a 3D object used for example is a plurality of triangular planes, not a triangular plane.

Fig. 5A shows a printing layer 3 of the 3D object for description. As shown in Fig. 5A, the printing layer 3 presents an L-shape, but for the processor, the printing layer 3 is composed of a plurality of triangular planes 4. In the exemplary embodiment shown in Fig. 5A, the printing layer 3 is composed of a first triangular plane 41, a second triangular plane 42, a third triangular plane 43 and a fourth triangular plane 44 parallel to a slicing plane (not shown). Therefore, the processor determines the color information of the whole printing layer 3 by the configuration of the color of each of the triangular planes 4. In other exemplary embodiments, the triangular planes 4 are not necessary to be parallel to the slicing plane.

As shown in Fig. 5B, if the printing layer 3 and another printing layer (adjacent to the printing layer 3) on the upper layer have an overlapped area 30, then the processor after comparing action, performs editing to each of the triangular planes 4, for deleting the color information of the part overlapped with the overlapped area 30 in each of the triangular planes 4, and generating modified triangular planes 5. In the exemplary embodiment shown in Fig. 5B, the modified triangular plane 5 includes a first modified triangular plane 51, a second modified triangular plane 52, a third modified triangular plane 53 and a fourth modified triangular plane 54.

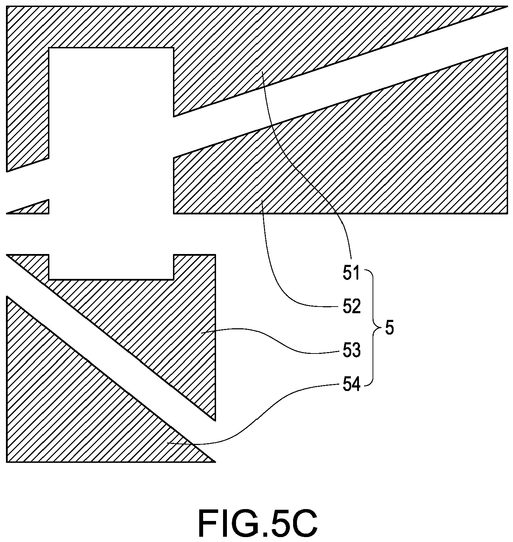

As shown in Fig. 5C, the color information on the overlapped area 30 has been removed from the modified triangular planes 5 (the modified triangular planes 5 become non-standard triangular plane). In the exemplary embodiment, the processor mainly determines the color information of the whole printing layer 3 by the color information of the modified triangular plane 5.

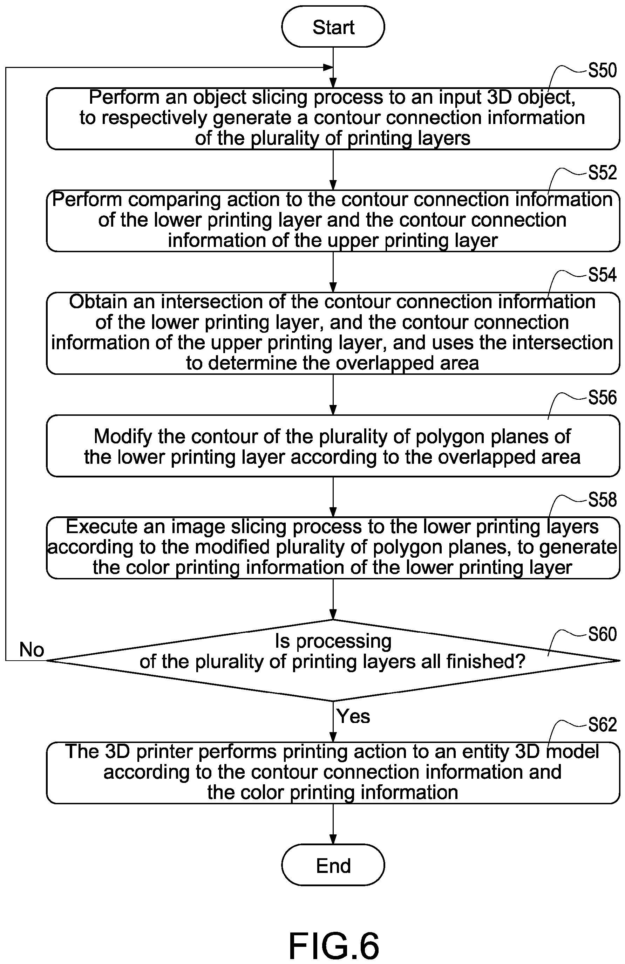

Please refer to Fig. 6, Fig. 6 shows a flowchart of deleting the internal color according to another specific exemplary embodiment of the present disclosure. Fig. 6 uses another specific exemplary embodiment to further describe the deleting flowchart shown in Fig. 2.

The exemplary embodiment shown in Fig. 6 is applied to the aforementioned computer device or 3D printer. The processor of the computer device or the 3D printer first performs an object slicing process to an input 3D object, to respectively generate the contour connection information of the plurality of printing layers (step S50). As mentioned above, each of the printing layers is respectively formed by a plurality of polygons.

After step S50, the processor performs comparing to a lower printing layer and an upper printing layer adjacent to the lower printing layer in the plurality of printing layers. Specifically, the processor performs comparing action to the contour connection information of the lower printing layer and the contour connection information of the upper printing layer (step S52), for obtaining an intersection of the contour connection information of the lower printing layer, and the contour connection information of the upper printing layer, and uses the intersection to determine the overlapped area (step S54).

After step S54, the processor modifies (according to the overlapped area) the contour of the plurality of polygon planes of the lower printing layer (step S56), and then executes an image slicing process to the lower printing layers according to the modified plurality of polygon planes, to generate the color printing information of the lower printing layer (step S58).

It should be noted that, in the exemplary embodiment shown in Fig. 4, the processor executes the image slicing process to generate the color printing information of the lower printing layer, and then performs modifying to the color printing information by the image recognition and editing process, for deleting the color on the overlapped area from the color printing information. In other words, the deleting step executed in the exemplary embodiment shown in Fig. 4, belongs to the editing action to the image.

In the exemplary embodiment shown in Fig. 6, the processor modifies the contour of the plurality of polygon planes of the lower printing layer, for deleting the information on the overlapped area, and then executes an image slicing process to the lower printing layers according to the modified plurality of polygon planes, and generates the color printing information. In this way, there will be no color information on the overlapped area in the color printing information generated by the processor. In other words, executing the deleting step in the exemplary embodiment shown in Fig. 6 belongs to the editing action performed to the printing route of the 3D object.

It should be noted that, in an exemplary embodiment, the processor executes one time of the image slicing process, after the contour of the plurality of polygon planes of a printing layer is modified completely, for generating the color printing information corresponding to the printing layer. In another exemplary embodiment, the processor also can execute the image slicing process, after the contour of the plurality of polygon planes of all printing layers are modified completely, for generating the color printing information corresponding to all the printing layers respectively, this is not limited.

After step S58, the processor determines if processing of the plurality of printing layers of the 3D object is all finished (step S60), before comparison between any two adjacent printing layers in the plurality of printing layers is all finished, step S50 to step S58 are executed repeatedly, for generating the color printing information of all the printing layers by the modified information.

If the processor determines that processing of the plurality of printing layers of the 3D object is all finished, then the contour connection information and the color printing information can be exported or stored temporarily, for the 3D printer performing (according to the contour connection information and the color printing information) printing action to an entity 3D model corresponding to the 3D object (step S62).

The processor can delete the color information on the internal structure at a 3D object in advance by the method. When a 3D printer prints (according to the 3D object) a corresponding entity 3D model, coloring to the inner 3D model could not be performed, in this way the excess ink wasted can be avoided effectively, and the firmness of the structure of the 3D model can be improved.

## Claims

1. A method for deleting internal color information of a 3D object, the method comprising:
a) performing an object slicing process to an input 3D object (2) by a processor, for obtaining data of a plurality of printing layers (3);
b) performing a comparing action to a lower printing layer (31) and an adjacent upper printing layer (32), and obtaining an overlapped area (30) of the lower printing layer (31) and the upper printing layer (32) according to a comparing result;
c) deleting color information on the overlapped area (30) from the data of the lower printing layer (31); and
d) executing the step b and the step c repeatedly by the processor before finishing comparison between any two adjacent printing layers of the plurality of printing layers (3).

2. The method for deleting internal color information of a 3D object of claim 1, wherein the step c further preserves the color information of an outer surface part belonging to the 3D object (2) in the overlapped area (30).

3. The method for deleting internal color information of a 3D object of claim 2, wherein the step a further comprises a step a1: performing an image slicing process to the 3D object (2), for generating color printing information of each of the printing layers (3) respectively.

4. The method for deleting internal color information of a 3D object of claim 3, wherein the step a generates a contour connection information of each of the printing layers (3) respectively after the object slicing process, and the step b obtains an intersection of the contour connection information of the lower printing layer (31) and the contour connection information of the upper printing layer (32), and using the intersection to determine the overlapped area (30).

5. The method for deleting internal color information of a 3D object of claim 3 or 4,
wherein the step c performs an image recognition and edit process to the color printing information of the lower printing layer (31), for deleting the color on the overlapped area (30) from the color printing information.

6. The method for deleting internal color information of a 3D object of one of claims 2-5,
wherein the step a performs the object slicing process to the 3D object (2) by the processor, for generating the contour connection information of each of the printing layers (3), wherein each of the printing layers (3) is formed by a plurality of polygons respectively.

7. The method for deleting internal color information of a 3D object of claim 6, wherein a plane of the polygon is a triangular plane (4).

8. The method for deleting internal color information of a 3D object of claim 6 or 7,
wherein the step b obtains an intersection of the contour connection information of the lower printing layer (31) and the contour connection information of the upper printing layer (32), and using the intersection to determine the overlapped area (30).

9. The method for deleting internal color information of a 3D object of one of claims 6-8,
wherein the step c modifies a contour of a plurality of polygons of the lower printing layer (31) according to the overlapped area (30), and executes an image slicing process to the lower printing layer (31) according to the plurality of polygon planes modified, for generating color printing information of the lower printing layer (31).

10. A method for deleting internal color information of a 3D object, comprising:
a) performing an object slicing process to an input 3D object (2) by a processor, for generating contour connection information of a plurality of printing layers (3) respectively, wherein each of the printing layers (3) is formed by a plurality of triangular planes;
b) obtaining an intersection of the contour connection information of a lower printing layer (31) and the contour connection information of an adjacent upper printing layer (32), and determining an overlapped area (30) of the lower printing layer (31) and the upper printing layer (32) according to the intersection;
c) modifying a contour of each of the triangular planes (4) of the lower printing layer (31) according to the overlapped area (30), for deleting information of the plurality of triangular planes (4) on the overlapped area (30);
d) executing an image slicing process to the lower printing layer (31) according to the plurality of modified triangular plane (5), for generating color printing information of the lower printing layer (31); and
e) executing the step b to the step d repeatedly by the processor before finishing comparison between any two adjacent printing layers of the plurality of printing layers (3).
